(19) 

**Europäisches Patentamt**
**European Patent Office**
**Office européen des brevets**

(11) **EP 4 283 365 A1**

(12) **EUROPEAN PATENT APPLICATION**

(43) Date of publication:
**29.11.2023 Bulletin 2023/48**

(21) Application number: **23173766.9**

(22) Date of filing: **16.05.2023**

(51) International Patent Classification (IPC):
**G02B 6/44** *(2006.01)*

(52) Cooperative Patent Classification (CPC):
**G01D 5/35316; G02B 6/4482**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.05.2022 US 202217827060**

(71) Applicant: **Kidde Technologies, Inc.**
**Wilson, NC 27896 (US)**

(72) Inventor: **LIU, Lei**
**Wake Forest (US)**

(74) Representative: **Dehns**
**St. Bride's House**
**10 Salisbury Square**
**London EC4Y 8JD (GB)**

(54) **DIGITAL DATA ENCODING IN OPTICAL FIBERS USING FIBER BRAGG GRATINGS**

(57) An optic system (100), optical fiber (102), and method of encoding information in the optical fiber (102). The optical fiber (102) includes a reference Fiber Bragg grating (FBG) (112) configured to reflect a light propagating in the optical fiber (102) at a reference intensity and a first encoder FBG (114) configured to reflect the light at a first encoder intensity. A light source (106) propagate light along the optical fiber (102). A detector (108) measures a reference intensity of the light reflected from the reference FBG (112) and an encoder intensity of the light reflected from the encoder FBG (114). A processor (110) decodes information encoded in the optical fiber (102) based on the reference intensity and the encoder intensity.

FIG. 5

EP 4 283 365 A1

**Description**

BACKGROUND

Exemplary embodiments pertain to the art of encoded optical fibers using Fiber Bragg Gratings (FBGs). FBGs are wavelength-selective reflectors that can be use in fiber optic communication and sensing. FBGs can be used to encoded digital information, such as a serial number, into an optical fiber. However, the amount of information that can be encoded is constrained by wavelength band, fiber length, etc. These limitations restrict the encoded optical fibers from being used in applications that require the encoding of high levels of digital information.

BRIEF DESCRIPTION

Disclosed is a method of encoding information in an optical fiber. Light is propagated through the optical fiber, the optical fiber having a first encoder Fiber Bragg grating (FBG) therein. A first encoded reflection of light indicative of an interaction of the propagated light with the first encoder FBG is received at a detector, wherein information for the first encoder FBG is encoded in an intensity of the first encoded reflection. The intensity of the first encoded reflection is measured to read the information of the first encoder FBG.

The method may further include receiving a reference reflection of light indicative of an interaction of the propagated light with a reference FBG in the optical fiber and comparing a reference intensity of the reference reflection to the intensity of the first encoded reflection to determine the encoded value.

The method may further include encoding the information for the first encoder FBG based on the first encoder intensity, a time of arrival of the first encoded reflection and a wavelength of the first encoded reflection.

In an embodiment, the optical fiber includes a second encoder FBG therein, wherein the first encoder FBG reflects light at a first wavelength and the second encoder FBG reflects light at a second wavelength.

In an embodiment, the first encoder FBG and the second encoder FBG are included within one of a plurality of FBG groups within the optical fiber.

In an embodiment, the intensity of the encoded reflection is an integer multiple of the reference intensity in one of (i) an arithmetic sequence; and (ii) a geometric sequence.

The method may further include performing a signal reversal operation when the first encoded reflection of light is received before the reference reflection at a detector.

Also disclosed herein is an optical fiber. The optical fiber includes a reference Fiber Bragg grating (FBG) configured to reflect a light propagating in the optical fiber at a reference intensity and a first encoder FBG configured to reflect the light at a first encoder intensity, wherein information is encoded in the optical fiber based on the reference intensity and the first encoder intensity.

The information may include a digit encoded in the optical fiber based on a comparison of the first encoder intensity to the reference intensity.

The optical fiber may further include a second encoder FBG, wherein the first encoder FBG reflects light at a first encoder wavelength and wherein the second encoder FBG reflects light at a second encoder wavelength. The information is further encoded by the first encoder FBG and the second encoder FBG based at least one of: (i) a time of arrival of a signal from each of the first encoder FBG and the second encoder FBG relative to the reference; and (ii) a first encoder wavelength of first encoder FBG and a second encoder wavelength of the second encoder FBG related to the reference.

In an embodiment, the first encoder FBG and the second encoder FBG are included within one of a plurality of FBG groups within the optical fiber.

In an embodiment, the first encoder intensity is an integer multiple of the reference intensity in one of (i) an arithmetic sequence; and (ii) a geometric sequence.

Also disclosed is an optical system. The optical system includes an optical fiber, a light source, a detector, and a processor. The optical fiber includes a reference Fiber Bragg grating (FBG) configured to reflect a light propagating in the optical fiber at a reference intensity and a first encoder FBG configured to reflect the light at a first encoder intensity. The light source is configured to propagate light along the optical fiber. The detector is configured to detect the light reflected from the reference FBG and from the encoder FBG. The processor is configured to decode information encoded in the optical fiber based on the reference intensity and the first encoder intensity.

The processor may be configured to decode the information by comparing the first encoder intensity to the reference intensity.

The optical fiber may further include a second encoder FBG, the first encoder FBG reflecting light at a first encoder wavelength and the second encoder FBG reflecting light at a second encoder wavelength.

The processor may be further configured to decode the information encoded by the first encoder FBG and the second encoder FBG based at least one of: (i) measuring a time of arrival of a signal from each of the first encoder FBG and the second encoder FBG; and (ii) measuring a first encoder wavelength of first encoder FBG and a second encoder wavelength of the second encoder FBG.

BRIEF DESCRIPTION OF THE DRAWINGS

The following descriptions should not be considered limiting in any way. With reference to the accompanying drawings, like elements are numbered alike:

FIG. 1 shows an optical system in an illustrative embodiment;

FIG. 2 shows an optical system in an alternate embodiment;

FIG. 3 shows an optical system having an optical fiber in an alternate embodiment;

FIG. 4 shows a diagram of amplitudes generated from Fiber Bragg Grating groups at various locations within the optical fiber, in an illustrative embodiment;

FIG. 5 shows a flowchart of a method for interrogating the optical fiber.

DETAILED DESCRIPTION

A detailed description of one or more embodiments of the disclosed apparatus and method are presented herein by way of exemplification and not limitation with reference to the Figures.

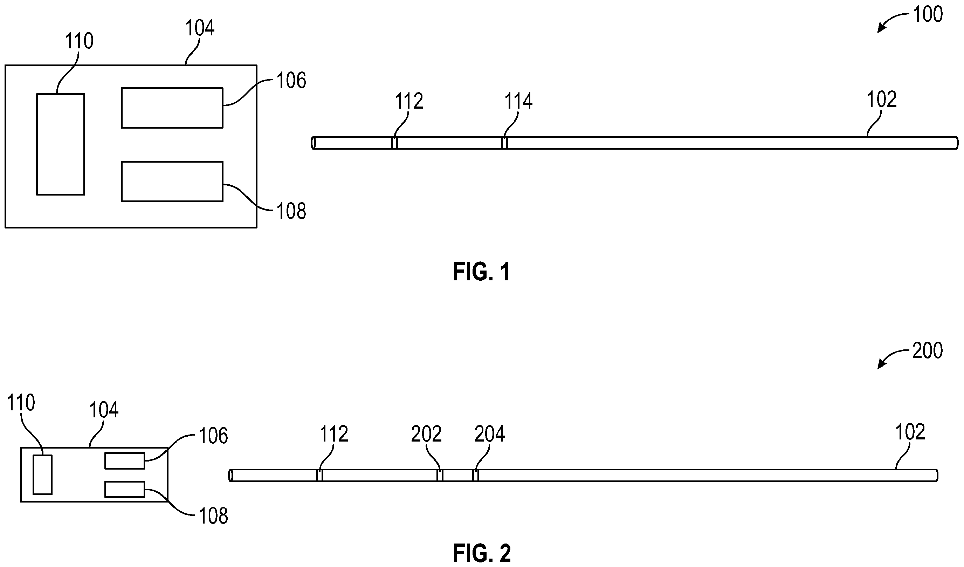

FIG. 1 shows an optical system 100 in an illustrative embodiment. The optical system 100 includes an optical fiber 102 and an optical interrogator 104. The optical fiber 102 is an encoded optical fiber that stores a digit or code therein that can be read by propagating a light through the encoded optical fiber 102 and observing an output of reflected light. The output is based on an interaction of the light with the optical fiber 102. The optical fiber 102 includes a plurality of Fiber Bragg gratings (FBGs) therein. A Fiber Bragg grating is a grating within the optical fiber 102 that reflects light at a selected wavelength known as a Bragg wavelength, which is directly related to the spacing of the grating. An optical interrogator 104 propagates a test signal through the optical fiber in the form of a continuous light beam or a light pulse. The test signal reflects from an FBG in the optical fiber 102, and the optical interrogator 104 measures various parameters of the reflected light to determine the encoding of the optical fiber 102 (i.e., the digit encoded therein). The optical interrogator 104 includes a light source 106, a light detector 108 and a processor 110. The light source 106 can be a laser or a broadband light source. In one embodiment, the light source 106 is a sweeping light source that sweeps across a preselected range of light wavelengths in a given period of time. In another embodiment, the light source 106 can be a white light source. In general, the intensity (also referred to herein as "amplitude") of the light source 106 at a given wavelength can be a known or controllable value and is constant across the range of wavelengths. The light detector 108 measures various parameters of the reflected light, such as time-of-flight (TOF), wavelength of the reflected light and intensity or amplitude of the reflected light. The processor 110 can then determine an encoded value in the optical fiber 102 based on these parameters.

The plurality of FBGs includes a reference Fiber Bragg grating (reference FBG 112) and at least one encoder Fiber Bragg grating (encoder FBG 114). The Bragg wavelength of the reference FBG 112 and the Bragg wavelength of the encoder FBG 114 are different, in order to facilitate distinguishing their signals from each other. The reference FBG 112 is formed within the optical fiber 102 to have a selected reflectivity coefficient and thus to reflect a selected percentage of the test signal. Thus, for a given intensity of the test signal, the reflected light from the reference FBG 112 has a given intensity, which is referred to herein as the reference intensity. Similarly, the encoder FBG 114 is formed in the optical fiber 102 to have a selected reflectivity coefficient and therefore to reflect the test signal at a given intensity, which is referred to herein as the encoder intensity. The encoder intensity can be the same as or different from the reference intensity. In various embodiments, the encoder intensity is an integer value of the reference intensity. Thus, for a reference FBG 112 having reflectivity $R_{ref}$, the encoder FBG 114 is designed to have a reflectivity as given in Eq. (1):

$$R_{enc} = q \cdot R_{ref} \qquad\qquad \text{Eq. (1)}$$

where $R_{enc}$ is the reflectivity of the encoder FBG 114 and $q \varepsilon \{0, 1, ..., Q\text{-}1\}$, where Q is a positive integer. In an illustrative embodiment, Q=5. Thus, for a reference FBG 112 having reflectivity $R_{ref}$ = 0.1%, the encoder FBG 114 can having a reflectively selected from a group $R_{ref} \varepsilon \{0, 0.1\%, 0.2\%, 0.3\%, 0.4\%\}$. By forming a ratio of the encoder intensity to the reference intensity, the encoder intensity is converted into a digit. In the illustrative embodiment in which Q=5, the encoded digits are selected from the group of q ε {0, 1, 2, 3, 4}. Although in the illustrative embodiment, the group of encoder ratios is an arithmetic sequence, in another embodiment, this group can be a geometric sequence, (e.g., q ε {0, 1, 2, 4, 8}) and the encoded digit is selected from this group.

FIG. 2 shows an optical system 200 in an alternate embodiment. The optical system 200 includes an optical fiber 102 and the optical interrogator 104. The optical fiber 102 includes the reference FBG 112, a first encoder FBG 202 and a second encoder FBG 204. The first encoder FBG 202 and the second encoder FBG 204 are at different locations or positions along the optical fiber 102.

The first encoder FBG 202 and the second encoder FBG 204 can be used to encode two digits within the optical fiber 102. Once, read, these digits can be combined at the processor 110 to form a digital word. In addition to encoding a digit based on the intensities of reflected light form an encoder FBG, the digit can be encoded based on the reflected wavelength of the FBG. The reference FBG 112 reflects light at a first wavelength (reference wavelength), while the first encoder FBG 202 reflects light at a first encoder wavelength and the second encoder FBG 204 reflects light at a second encoder wavelength. The reference wavelength, first encoder wavelength and second encoder wavelength are all different from each other. The digital word includes a first digit encoded by the first encoder FBG 202 at first encoder wavelength and a second digit encoded by the second encoder FBG 204 at the second encoder wavelength. In general, the reference FBG 112 is formed such that, as a test signal is swept through a range of wavelength, the reference wavelength is the first to be received at the optical interrogator 104.

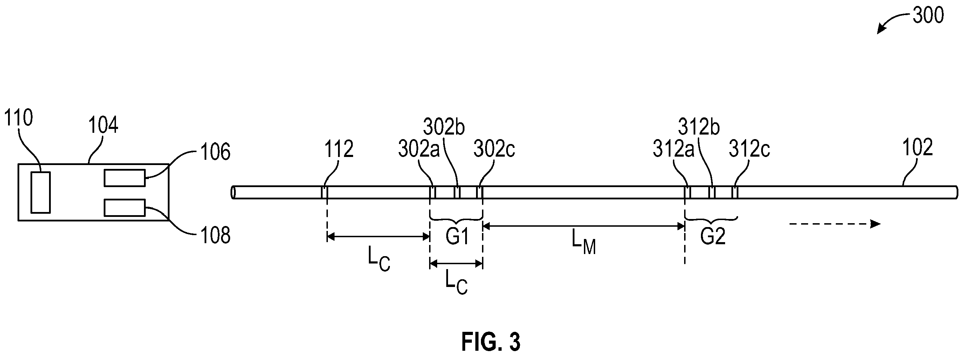

FIG. 3 shows an optical system 300 having an optical fiber 302 in an alternate embodiment. The optical fiber 302 includes the reference FBG 112 and a plurality of FBG groups (G1, G2, ...). Each FBG group has a plurality of encoder FBGs therein. Only two groups (G1, G2) are shown for illustrative purposes. However, the optical fiber 102 can include any number of FBG groups, in various embodiments.

The FBG groups are physically separated by a group separation distance LM between adjacent FBG groups. The first FBG group G1 is separated from the reference FBG 112 by a lead length Lc. Each FBG group has a group length $L_G$, which includes all of the encoder FBGs of the FBG group. The group separation distance $L_M$ is greater than the group length $L_G$. Since the reference FBG 112 and each FBG within a single FBG group have different wavelength slots, both the lead length Lc and the group length $L_G$ can be more than an order smaller than $L_M$.

A total of *w* encoders FBGs can be arranged at different locations within an FBG group, each location being a position within the FBG group at which an FBG can be placed. With each FBG having its own individual reflection wavelength, up to w wavelengths can be represented in an FBG group. It is noted that the wavelengths are not necessarily arranged such that they always increase with distance along the optical fiber in the FBG group. In order words, the wavelengths can show up in any order within the FBG group. Also, it is possible that a location at which an encoder FBG might otherwise be positioned is left empty in order to encode a digit value of '0' for the encoder FBG wavelength. The location is left by simply not forming an encoder FBG at the location.

For illustrative purposes, the first FBG group (G1) includes a first encoder FBG 302a, a second encoder FBG 302b and a third encoder FBG 302c. The second FBG group (G2) includes encoders FBGs 312a, 312b and 312c. The reference FBG 112 is located between the first FBG group G1 and the optical interrogator 104. In order to distinguish the reference wavelength, the encoder wavelengths are groups in a cluster, while the reference wavelength is separated from the cluster.

While encoder FBGs within an FBG group reflect light at different wavelengths, an encoder FBG of the first FBG group can reflect light at the same wavelength as an encoder FBG of the second group. For an encoder FBG within the first FBG group and an encoder FBG within the second FBG group that reflect light at the same wavelength, the time-of flight for their reflected signals can be used to distinguish between them. In general, time-of flight is used as a parameter for distinguishing FBG groups from one another.

In the illustrative optical system 300, a narrowband wavelength-stepping pulse-echo light source 106 is used. The wavelength range of the light source is selected so that it covers all of the wavelength slots for both the reference FBG and the FBG groups. The wavelength, spatial location, and amplitude of the reflected light for the FBG groups are used to determine the information encoded int the optical fiber. Error detection and correction techniques, such as Reed-Solomon code, hamming code and cyclic error correcting code, can be applied during the decoding process in order to add redundancy and increase the size of data to be encoded, as well as to ensure data integrity.

Digital data can be either be partitioned into differently sized multi-bit aggregates to fit into a single FGB group or lumped together so as to be distributed over all FBG groups. For example, a 64-bit binary data can be encoded as a single integer value. In an embodiment, with Q=4 and w=16, the integer can be converted into a base 32 number. This base 32 number can be encoded using two FBG groups.

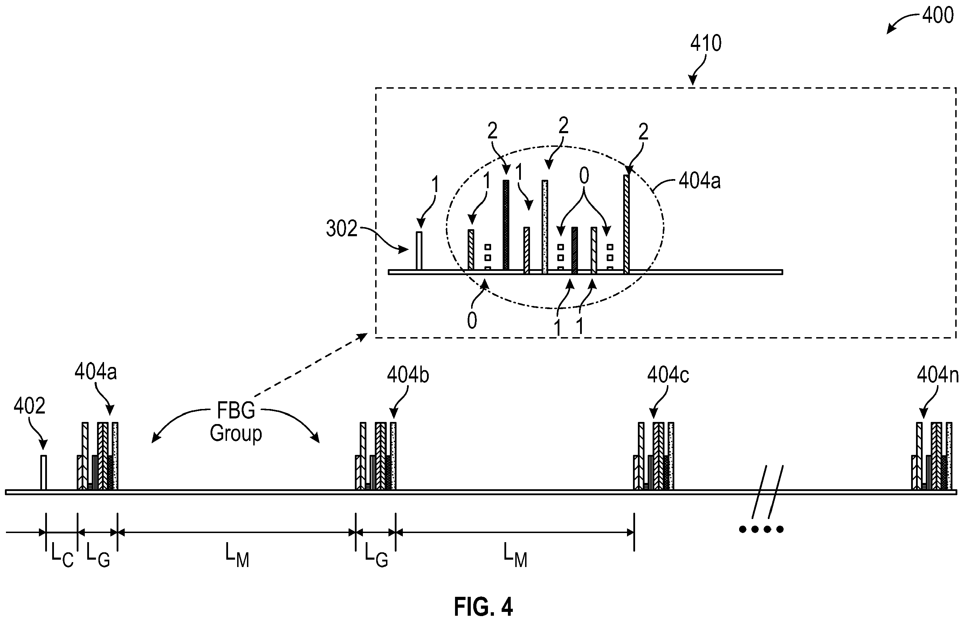

FIG. 4 shows a diagram of amplitudes generated from FBG groups at various locations within the optical fiber 302, in an illustrative embodiment. A reference amplitude 402 (corresponding to the reference FBG 112) is shown at a first end of the optical fiber and amplitude groups 404a-404n (corresponding to FBG groups G1, G2, ...).

The reference signal provides a directional reference, position reference, wavelength reference and amplitude reference for the encoder signals. Based on the arrangement of the optical interrogator (such as in FIG. 3, for example), the reference signal is received prior to any other signals, sine the reference FBG 112 is closest to the optical interrogator 104. If reference signal is received last, then it can be determined that optical interrogator 14 is at an opposite end of the optical fiber. A suitable signal reversal operation can then be performed in order to decode the digits based on the reversed direction of the light in the optical fiber.

Box 410 shows a close-up of the encoder amplitudes of the first amplitude group 404a, along with the reference amplitude 402. In the illustrative embodiment, the amplitude group 404a includes the amplitudes at 10 wavelength slots (i.e., $w = 10$), each of which corresponds to a location of an encoder FBG. The reference amplitude 402 defines a digit value of '1'. The amplitudes at the wavelength slots show digital values of '0' (indicated by dashed lines), '1' and '2', which read spatially, from left to right, as '1021201102'.

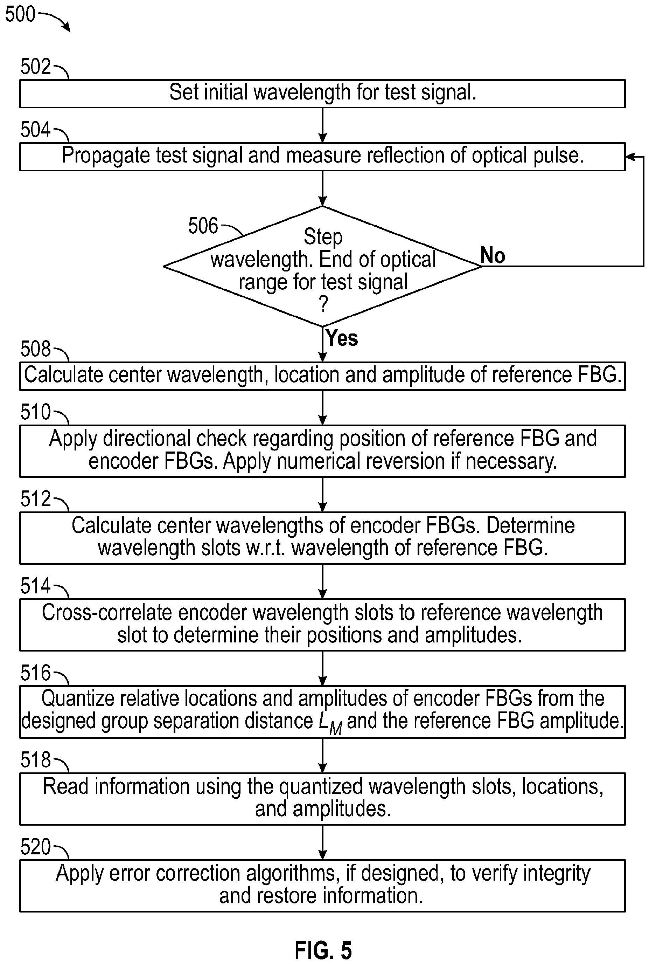

FIG. 5 shows a flowchart 500 of a method for interrogating the optical fiber 102. In box 502, an interrogation wavelength of a test signal is set to a first wavelength of an interrogation range of wavelengths. In box 504, the test signal is propagated along the optical fiber at the set wavelength. In box 506, the wavelength of the test signal is stepped up to a new wavelength. If the wavelength of the test signal is still within of the interrogation range, the method returns to box 504. If the wavelength of the test signal is outside of the interrogation range, the method proceeds to box 508. In box 508, the center wavelength, position and amplitude corresponding to the reference FBG is calculated. The center wavelength is a Bragg wavelength or the central wavelength of the reflected light from the reference FBG. In box 510, a directional check is performed regarding the relative location of the reference FBG and the encoder FBG groups. When necessary, the processor performs a numerical reversal operation.

In box 512, the center wavelength of the encoder FBGs are determined. In addition, the wavelength slots are determined with respect to the wavelength of the reference FBG. In box 514, the wavelength slot of each encoder FBG is cross-referenced to the wavelength slot of the reference FBG to determine its position and amplitude. In box 516, the positions and amplitudes of the encoder FBGs are quantized. Quantization uses the group separation $L_M$ and the reference intensity. In box 518, the quantized information is used to read the digits encoded in the encoder FBGs based on the amplitudes, positions, and wavelengths. In box 520, error correction algorithms are applied, if necessary, to verify the integrity of the information.

It is to be noted that the information encoded in the optical fiber can be related to other information obtained by the optical fiber, such as at one or more sensors at other locations along the optical fiber. In another embodiment, the optical fiber can be attached to an article of manufacture and the information can be related to the associated article of manufacture.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

**1.** A method of encoding information in an optical fiber, comprising:

propagating a light through the optical fiber, the optical fiber having a first encoder Fiber Bragg grating (FBG) therein;
receiving, at a detector, a first encoded reflection of light indicative of an interaction of the propagated light with the first encoder FBG, wherein the information for the first encoder FBG is encoded in an intensity of the first encoded reflection; and
measuring the intensity of the first encoded reflection to read the information of the first encoder FBG.

**2.** The method of claim 1, further comprising:

receiving a reference reflection of light indicative of an interaction of the propagated light with a reference FBG in the optical fiber; and

comparing a reference intensity of the reference reflection to the intensity of the first encoded reflection to determine the encoded value;

optionally further comprising performing a signal reversal operation when the first encoded reflection of light is received before the reference reflection at a detector.

3. The method of claim 1 or 2, further comprising encoding the information for the first encoder FBG based on the first encoder intensity, a time of arrival of the first encoded reflection and a wavelength of the first encoded reflection.

4. The method of claim 1, 2 or 3, wherein the optical fiber includes a second encoder FBG therein, wherein the first encoder FBG reflects light at a first wavelength and the second encoder FBG reflects light at a second wavelength; optionally wherein the first encoder FBG and the second encoder FBG are included within one of a plurality of FBG groups within the optical fiber.

5. The method of any preceding claim, wherein the intensity of the encoded reflection is an integer multiple of the reference intensity in one of (i) an arithmetic sequence; and (ii) a geometric sequence.

6. An optical fiber, comprising:

a reference Fiber Bragg grating (FBG) configured to reflect a light propagating in the optical fiber at a reference intensity; and

a first encoder FBG configured to reflect the light at a first encoder intensity, wherein information is encoded in the optical fiber based on the reference intensity and the first encoder intensity.

7. The optical fiber of claim 6, wherein the information includes a digit encoded in the optical fiber based on a comparison of the first encoder intensity to the reference intensity.

8. The optical fiber of claim 6 or 7, further comprising a second encoder FBG, wherein the first encoder FBG reflects light at a first encoder wavelength and wherein the second encoder FBG reflects light at a second encoder wavelength.

9. The optical fiber of claim 8, wherein the information is further encoded by the first encoder FBG and the second encoder FBG based at least one of: (i) a time of arrival of a signal from each of the first encoder FBG and the second encoder FBG relative to the reference; and (ii) a first encoder wavelength of first encoder FBG and a second encoder wavelength of the second encoder FBG related to the reference.

10. The optical fiber of claim 8 or 9, wherein the first encoder FBG and the second encoder FBG are included within one of a plurality of FBG groups within the optical fiber.

11. The optical fiber of any one of claims claim 6-10, wherein the first encoder intensity is an integer multiple of the reference intensity in one of (i) an arithmetic sequence; and (ii) a geometric sequence.

12. An optical system, comprising:

the optical fiber of any one of claims 6-11;

a light source configured to propagate light along the optical fiber;

a detector configured to detect the light reflected from the reference FBG and from the encoder FBG; and

a processor configured to decode information encoded in the optical fiber based on the reference intensity and the first encoder intensity.

13. The optical system of claim 12, wherein the processor is configured to decode the information by comparing the first encoder intensity to the reference intensity.

14. The optical system of claim 12 or 13, wherein the first encoder intensity is an integer multiple of the reference intensity.

15. The optical system of claim 12, 13 or 14, wherein the processor is further configured to perform a signal reversal operation when the first encoded reflection of light is received before the reference reflection at the detector.

**FIG. 1**

**FIG. 2**

EP 4 283 365 A1

**FIG. 3**

EP 4 283 365 A1

FIG. 4

500 ⌐

502 ⌐
| Set initial wavelength for test signal. |

504 ⌐
| Propagate test signal and measure reflection of optical pulse. |

506 ⌐ Step wavelength. End of optical range for test signal ?　　**No**

**Yes**

508 ⌐
| Calculate center wavelength, location and amplitude of reference FBG. |

510 ⌐
| Apply directional check regarding position of reference FBG and encoder FBGs. Apply numerical reversion if necessary. |

512 ⌐
| Calculate center wavelengths of encoder FBGs. Determine wavelength slots w.r.t. wavelength of reference FBG. |

514 ⌐
| Cross-correlate encoder wavelength slots to reference wavelength slot to determine their positions and amplitudes. |

516 ⌐
| Quantize relative locations and amplitudes of encoder FBGs from the designed group separation distance $L_M$ and the reference FBG amplitude. |

518 ⌐
| Read information using the quantized wavelength slots, locations, and amplitudes. |

520 ⌐
| Apply error correction algorithms, if designed, to verify integrity and restore information. |

**FIG. 5**

Europäisches
Patentamt

European
Patent Office

Office européen
des brevets

# EUROPEAN SEARCH REPORT

Application Number

EP 23 17 3766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 671 308 A (INOUE AKIRA [JP] ET AL) 23 September 1997 (1997-09-23) * column 2, line 23 - column 3, line 35 * * column 7, line 57 - column 11, line 54; claims 1-9; figures 8-15 * | 1-15 | INV. G02B6/44 |
| X | WO 2005/029145 A1 (REDFERN OPTICAL COMPONENTS PTY [AU]; ENGLUND MARK ANDREW [AU] ET AL.) 31 March 2005 (2005-03-31) * page 8, line 6 - page 12, line 5; figures 1-5 * | 1 | |
| A | US 2005/271316 A1 (WEAVER THOMAS L [US]) 8 December 2005 (2005-12-08) * the whole document * | 1-15 | |

TECHNICAL FIELDS
SEARCHED        (IPC)

G02B
G01D

The present search report has been drawn up for all claims

| Place of search | Date of completion of the search | Examiner |
|---|---|---|
| Munich | 18 September 2023 | Lyons, Christopher |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 23 17 3766

This annex lists the patent family members relating to the patent documents cited in  the above-mentioned European search report.
The members are as contained in the European Patent Office EDP file on
The European Patent Office is in no way liable for these particulars which are merely given for the purpose of information.

18-09-2023

| Patent document cited in search report | | Publication date | Patent family member(s) | | Publication date |
|---|---|---|---|---|---|
| US 5671308 | A | 23-09-1997 | AU | 4271393 A | 29-11-1993 |
| | | | CA | 2112692 A1 | 02-11-1993 |
| | | | CN | 1082717 A | 23-02-1994 |
| | | | CN | 1249576 A | 05-04-2000 |
| | | | DE | 69321548 T2 | 15-04-1999 |
| | | | DE | 69333369 T2 | 07-10-2004 |
| | | | EP | 0592690 A1 | 20-04-1994 |
| | | | EP | 0851248 A2 | 01-07-1998 |
| | | | KR | 0148255 B1 | 17-08-1998 |
| | | | KR | 940701538 A | 28-05-1994 |
| | | | NO | 318903 B1 | 18-05-2005 |
| | | | US | 5506674 A | 09-04-1996 |
| | | | US | 5671308 A | 23-09-1997 |
| | | | WO | 9322647 A1 | 11-11-1993 |
| WO 2005029145 | A1 | 31-03-2005 | CN | 1882860 A | 20-12-2006 |
| | | | EP | 1671165 A1 | 21-06-2006 |
| | | | JP | 2007507052 A | 22-03-2007 |
| | | | KR | 20060094523 A | 29-08-2006 |
| | | | US | 2007277191 A1 | 29-11-2007 |
| | | | WO | 2005029145 A1 | 31-03-2005 |
| US 2005271316 | A1 | 08-12-2005 | NONE | | |

EPO FORM P0459

For more details about this annex : see Official Journal of the European Patent Office, No. 12/82